# EUROPÄISCHE PATENTSCHRIFT

(11) **EP 3 160 615 B1**
(45) Veröffentlichungstag und Bekanntmachung des Hinweises auf die Patenterteilung: **08.09.2021**
(21) Anmeldenummer: 15731042.6
(22) Anmeldetag: 23.06.2015
(51) Int. Cl.: B01D 36/00, B01D 27/08, B01D 27/10

(54) **FILTEREINRICHTUNG, INSBESONDERE FLÜSSIGKEITSFILTER**
FILTER DEVICE, IN PARTICULAR LIQUID FILTER
DISPOSITIF FILTRANT EN PARTICULIER FILTRE POUR LIQUIDES

(30) Priorität: 27.06.2014 DE 102014009330; 27.06.2014 DE 102014009327
(43) Veröffentlichungstag der Anmeldung: 03.05.2017
(73) Patentinhaber: MANN+HUMMEL GmbH, 71636 Ludwigsburg (DE)
(72) Erfinder: SCHRECKENBERGER, Dieter, 71729 Erdmannhausen (DE); THALMANN, Christian, 67346 Speyer (DE); HASENFRATZ, Robert, 74523 Schwäbisch Hall (DE); RÖSGEN, André, 73630 Remshalden (DE); PFLÜGER, Frank, 74343 Sachsenheim (DE); WAGNER, Fabian, 72127 Kusterdingen (DE)
(74) Vertreter: Mann + Hummel Intellectual Property
(86) Internationale Anmeldenummer: PCT/EP2015/064047
(87) Internationale Veröffentlichungsnummer: WO 2015/197583

(56) Entgegenhaltungen:
- DE-A1-102011 009 925
- JP-A- 2011 062 658
- US-A- 3 513 979
- US-A- 3 682 320
- US-A1- 2013 043 181

## Beschreibung

### Technisches Gebiet

Die Erfindung bezieht sich auf eine Filtereinrichtung, insbesondere einen Flüssigkeitsfilter, nach dem Oberbegriff des Anspruches 1.

### Stand der Technik

In der EP 2 110 539 A2 wird eine Filtereinrichtung für Dieselkraftstoff beschrieben, die in einem topfförmigen Filtergehäuse ein ringförmiges Filterelement aufweist, das radial von außen nach innen von dem zu reinigenden Kraftstoff durchströmt wird. Das Filterelement weist an seinen axialen Stirnseiten jeweils eine Endscheibe auf. Die Zufuhr des ungereinigten Kraftstoffes erfolgt im Bereich einer ersten axialen Stirnseite über ein Heizmodul, das auf einen Deckel des Filtergehäuses aufgeflanscht und mithilfe einer Steckverbindung gehalten ist. In das Heizmodul ist ein Zulaufstutzen eingebracht zum Anschluss an eine Kraftstoffleitung, wobei der Kraftstoff auf der gegenüberliegenden Seite des Heizmoduls über einen weiteren Stutzen zur radial außen liegenden Rohseite des Filterelementes geleitet wird. Ein Zentralstutzen am Heizmodul ragt durch eine Öffnung in der Endscheibe in den Reinraum ein; der Zentralstutzen ist Teil einer Druckmessvorrichtung, über die der Differenzdruck zwischen Roh- und Reinseite gemessen werden kann. Die Ableitung des gereinigten Fluids erfolgt über die dem Heizmodul axial gegenüberliegende Endscheibe des Filterelementes.

Die Dokumente JP 2011 062 658 A und US 2013 043181 A1 offenbaren geschraubte Filter.

US 3 682 3320 A offenbart einen Filter, welcher eine Kartusche und einen Filterkopf aufweist, wobei der Filterkopf mittels eine ringförmigen Drahtlänge mit der Kartusche verbunden wird.

### Offenbarung der Erfindung

Der Erfindung liegt die Aufgabe zugrunde, eine Filtereinrichtung, die an ein Rohranschlussstück anschließbar ist, konstruktiv einfach und kompakt auszuführen.

Diese Aufgabe wird erfindungsgemäß mit den Merkmalen der Ansprüche 1 und 7 gelöst. Die Unteransprüche geben zweckmäßige Weiterbildungen an.

Die erfindungsgemäße Filtereinrichtung bzw. -kartusche wird vorzugsweise zur Flüssigkeitsfiltration eingesetzt, beispielsweise zur Kraftstofffiltration wie zum Beispiel von Dieselkraftstoff. Grundsätzlich möglich ist aber auch ein Einsatz zur Filtration gasförmiger Fluide.

Die Filtereinrichtung weist in einem Filtergehäuse ein hohlzylindrisches bzw. ringförmiges Filterelement auf, das in Radialrichtung, vorzugsweise radial von außen nach innen, von dem zu reinigenden Fluid durchströmt wird. Das Filterelement weist an seinen beiden axialen Stirnseiten jeweils eine Endscheibe auf, wobei zumindest in eine Endscheibe eine Strömungsöffnung für das Fluid eingebracht ist. Bei einer Durchströmungsrichtung radial von außen nach innen bildet der Innenraum die Reinseite, über die das gereinigte Fluid axial über die Strömungsöffnung in der Endscheibe abgeleitet werden kann.

Auf das Filtergehäuse ist ein Deckel aufgesetzt, in den ein Anschluss für die Zufuhr bzw. Ableitung des Fluids, welches durch das Filterelement geleitet wird, eingebracht ist. Der Anschluss ist als eine Öffnung im Deckel ausgeführt, in den ein erstes Dichtungselement eingesetzt ist. Vorteilhafterweise besitzt der Deckel nur genau einen Anschluss in Form der Öffnung, in die ein Rohranschlussstück mit einem koaxial angeordneten Zulaufkanal und Ablaufkanal einführbar ist. Zusätzlich zu dem Anschluss im Deckel, in den ein erstes Dichtungselement eingesetzt ist, weist die Filtereinrichtung in der Strömungsöffnung, welche in die Endscheibe eingebracht ist, ein zweites Dichtungselement auf. Das erste und das zweite Dichtungselement dichten jeweils vorteilhafterweise in Radialrichtung ab, insbesondere radial nach innen.

In einer bevorzugten Ausführungsform sind Deckel und Filtergehäuse unlösbar miteinander verbunden, beispielsweise durch Schweißen, Löten, Bördeln oder Kleben. Somit wird ein einfach zu wechselnder Einwegwechselfilter ausgebildet, der insbesondere mit einem Filterkopf oder einem erfindungsgemäßen Rohranschlusstück verbindbar ist.

Diese Ausführung ermöglicht in einfacher Weise die Verbindung der Filtereinrichtung mit einem einzigen Rohranschlussstück, über das sowohl die Zufuhr von Rohfluid als auch die Ableitung von Reinfluid erfolgt. Das Rohranschlussstück ist separat von der Filtereinrichtung ausgeführt und wird über den Anschluss im Deckel mit der Filtereinrichtung verbunden. Der Anschluss im Deckel mit dem ersten Dichtungselement sowie die Strömungsöffnung in der Endscheibe mit dem zweiten Dichtungselement sind koaxial zueinander angeordnet; dieser koaxialen Positionierung entspricht die koaxiale Anordnung von Zulaufkanal und Ablaufkanal im Rohranschlussstück.

Die Filtereinrichtung mit Filtergehäuse, Filterelement sowie Deckel einschließlich der Dichtungselemente im Deckel bzw. in der Strömungsöffnung in der Endscheibe kann aufgrund der separaten Ausführung von Filtereinrichtung und Rohranschlussstück als Austauschteil konzipiert sein. Dies ermöglicht beispielsweise für Wartungszwecke den Austausch der Filtereinrichtung, indem lediglich das Rohranschlussstück von der Filtereinrichtung gelöst und anschließend eine neue Filtereinrichtung eingesetzt wird, mit der das Rohranschlussstück wieder verbunden werden kann. Beispielsweise in der Ausführung als Kraftstofffilter kann dieser auf einfache, manuelle Weise durch einen neuen Kraftstofffilter ersetzt werden. Das Rohranschlussstück, welches separat von der Filtereinrichtung ausgeführt ist, kann dagegen bei einem Austausch der Filtereinrichtung beibehalten werden.

Die Filtereinrichtung und das Rohranschlussstück bilden gemeinsam ein Filtersystem zur Filtration einschließlich der Zufuhr und der Ableitung eines Fluids. An das Rohranschlussstück können Fluidschläuche oder -leitungen angeschlossen werden.

Gemäß einer vorteilhaften Ausführung weisen die Öffnung im Deckel sowie die Strömungsöffnung in der zugewandten Endscheibe des Filterelementes unterschiedliche Durchmesser auf; auch die in die Öffnung bzw. die Strömungsöffnung eingesetzten Dichtungselemente besitzen entsprechend einen unterschiedlich großen Durchmesser. Die Öffnungen liegen koaxial zueinander, was die Verwendung eines Rohranschlussstücks mit entsprechend koaxial angeordnetem Zulauf- und Ablaufkanal ermöglicht, deren Durchmesser an den Durchmesser der Öffnung im Deckel bzw. in der Endscheibe angepasst ist.

Die Öffnung im Deckel mit dem ersten Dichtungselement und die Strömungsöffnung in der Endscheibe mit dem zweiten Dichtungselement sind, gemäß weiterer vorteilhafter Ausführung, axial versetzt zueinander angeordnet. Dementsprechend enden auch der Zulauf- und Ablaufkanal im Rohranschlussstück auf axial unterschiedlicher Höhe, indem beispielsweise der Ablaufkanal eine größere Länge als der Zulaufkanal aufweist und in die Strömungsöffnung in der Endscheibe einragt, wohingegen der Zulaufkanal des Rohranschlussstücks, über den die Zufuhr mit Rohfluid erfolgt, in die Öffnung im Deckel einragt und an dem Dichtungselement im Deckel anliegt. Das Dichtungselement im Deckel besitzt vorteilhafterweise ebenso wie diese Öffnung einen größeren Durchmesser als das Dichtungselement bzw. die Strömungsöffnung in der Endscheibe. Aufgrund der koaxialen Anordnung von Zulauf- und Ablaufkanal im Rohranschlussstück können beide Kanäle gemeinsam in die größere Öffnung im Deckel eingesetzt werden. Da jedoch der Kanal mit größerem Durchmesser kürzer ausgebildet ist als derjenige mit kleinerem Durchmesser, ist eine Trennung von gereinigtem und ungereinigtem Fluid möglich.

Es kann zweckmäßig sein, ein Rückschlagventil in das Rohranschlussstück zu integrieren, das bei einem Lösen des Rohranschlussstücks von der Filtereinrichtung ein unerwünschtes Abströmen von Fluid verhindert, welches sich noch in dem Rohranschlussstück befindet. Das Rückschlagventil ist beispielsweise im Zulaufkanal angeordnet und verhindert nach dem Lösen des Rohranschlussstücks von der Filtereinrichtung ein unkontrolliertes Abströmen von Rohfluid.

Das Rohranschlussstück ist in einer formschlüssigen Weise am Deckel zu befestigen. Hierfür weist der Deckel oder ein mit dem Deckel verbundenes Bauteil einen radial gerichteten Kragen - bezogen auf die Filterlängsachse - auf, der im montierten Zustand einen axialen Anschlag für das Rohranschlussstück bildet. Die formschlüssige Sicherung und Halterung des Rohranschlussstücks am Deckel stellt eine montagefreundliche und einfach herzustellende Verbindung dar, die gegebenenfalls leicht wieder gelöst werden kann, um die Filtereinrichtung auszutauschen und eine neue Filtereinrichtung mit dem bestehenden Rohranschlussstück zu verbinden. Der Formschluss besteht in Achsrichtung, auch die Montage des Rohranschlussstücks an der Filtereinrichtung erfolgt in Achsrichtung.

Es kommen sowohl Ausführungen mit einem radial nach innen als auch einem radial nach außen gerichteten Kragen am Deckel in Betracht. Wesentlich hierbei ist, dass ein zugeordneter Verbindungsabschnitt am Rohranschlussstück den Kragen axial übergreift. Zur Montage werden Rohranschlussstück und Filtereinrichtung axial so weit angenähert, bis in gewünschter Weise der Verbindungsabschnitt den Kragen axial übergreift, woraufhin der Formschluss durch eine Verstellbewegung zwischen Rohranschlussstück und Filtereinrichtung in Radialrichtung, also quer zur Filterlängsachse hergestellt wird.

Die Herstellung des Formschlusses zwischen Rohranschlussstück und Kragen am Deckel der Filtereinrichtung erfolgt mithilfe eines Riegels, der in eine Formschlusstasche am Verbindungsabschnitt, die zwischen dem radial gerichteten Kragen und dem Verbindungsabschnitt am Rohranschlussstück angeordnet ist, einführbar ist. Die Einführrichtung des Riegels erfolgt insbesondere quer zur Filterlängsachse, also ebenfalls radial. Der Riegel in der Formschlusstasche liegt axial zwischen dem Kragen und einem Bauteil am Verbindungsabschnitt des Rohranschlussstücks und verhindert ein axiales Entfernen zwischen Rohranschlussstück und Filtereinrichtung, so dass das Rohranschlussstück an der Filtereinrichtung formschlüssig gesichert ist.

Der Riegel ist beispielsweise U-förmig ausgebildet und wird durch eine Ausnehmung in der die Formschlusstasche begrenzenden Wandung des Verbindungsabschnitts radial in seine Verriegelungsposition eingeschoben, in der das axiale Lösen des Rohranschlussstücks von dem Deckel blockiert ist. Möglich ist aber auch eine rechteckförmige Ausführung des Riegels, der in Radialrichtung ebenfalls in eine Ausnehmung in der Wandung der Formschlusstasche eingeschoben wird und in die Formschlusstasche einragt.

Der Kragen ist entweder einteilig mit dem Deckel oder separat von diesem ausgebildet, jedoch mit dem Deckel bevorzugt unverlierbar oder unlösbar verbunden, beispielsweise durch Schweißen, Löten, Bördeln oder Kleben. Der Deckel besteht beispielsweise aus Metall, auch der Kragen kann als Metallbauteil ausgeführt sein. Bei separater Ausführung ist der Kragen beispielsweise mithilfe einer Umbördelung mit dem Deckel verbunden oder am Deckel angelötet. Bei einteiliger Ausführung von Deckel und Kragen ist letzterer beispielsweiwse durch Urformen oder radiales Umbiegen eines axialen Abschnittes des Deckels hergestellt.

Gemäß einer weiteren zweckmäßigen Ausführung weist die Filtereinrichtung insbesondere radial versetzt zur Formschlusstasche eine Dichttasche auf, die zur Aufnahme eines Dichtungselementes am Deckel dient. Die Dichttasche ist axial vom Kragen bzw. einem Deckelabschnitt begrenzt und sichert hierdurch das eingesetzte Dichtungselement axial in formschlüssiger Weise. Das Dichtungselement kann als ein Dichtring ausgebildet sein, der am Deckel gehalten, beispielsweise auf einen Stutzen am Deckel aufgeschoben ist. Das Dichtungselement separiert die Roh- von der Reinseite des Filterelementes.

Gemäß einer weiteren zweckmäßigen Ausführung ist der Kragen auf der Außenseite des Deckel von diesem beabstandet. Dies kann beispielsweise dadurch realisiert werden, dass am Deckel ein rohrförmiger, insbesondere strömungsführender Forstsatz vorgesehen ist, an dessen vom Deckel beabstandeten Ende der Kragen angeordnet ist. Vom Deckel beabstandet ist hier so zu verstehen, dass der Deckel eine das Gehäuse verschließende Deckfläche aufweist, von welcher der Kragen, der durchaus auch Teil des Deckels sein kann, beabstandet ist. Dadurch ist zwischen Deckel und Kragen ein radial nach außen geöffneter, ringnutförmiger Eingriffsbereich für den Riegel gebildet, wobei besonders bevorzugt die Dichttasche axial auf einer Höhe zwischen Kragen und Deckel und damit radial innerhalb des Eingriffsbereichs angeordnet ist. Durch die Anordnung der Dichtung in unmittelbarer Nähe zum Kragen, an welchem die Formschlüssige Verbindung erfolgen kann, sind die im Betrieb auftretenden, durch Vibrationen hervorgerufenen Formänderungen der Einzelteile im Bereich der Dichtung gering, so dass die Gefahr von Vibrationsbedingten Leckagen reduziert wird.

Die Dichttasche zur Aufnahme des Dichtungselementes kann gegenüber der Formschlusstasche radial nach innen versetzt angeordnet sein. Bezogen auf die Filterlängsachse kommen sowohl axial versetzte Anordnungen als auch Anordnungen auf axial gleicher Höhe von Dichttasche und Formtasche in Betracht. Gegebenenfalls sind auch Ausführungen möglich, bei denen die Dichttasche gegenüber der Formschlusstasche radial nach außen versetzt angeordnet ist.

Die axiale Begrenzung der Dichttasche kann über ein Begrenzungsteil erfolgen, das, gemäß weiterer vorteilhafter Ausführung, separat vom Kragen ausgeführt ist und ebenfalls am Deckel angeordnet ist. Gegebenenfalls kommt auch eine einteilige Ausführung des Begrenzungsteils mit dem Kragen in Betracht. Das Begrenzungsteil kann aus dem gleichen Material wie der Kragen bestehen und entsprechend wie der Kragen mit dem Deckel verbunden sein, beispielsweise durch Löten. Es ist auch eine einteilige Ausführung des Begrenzungsteils mit dem Deckel möglich.

In die Endscheibe des Filterelementes kann ein Zentrierstutzen eingebracht sein, der zur Aufnahme des Rohranschlussstückes dient. Zwischen Rohranschlussstück und Zentrierstutzen ist vorteilhafterweise ein Dichtungselement eingesetzt, um eine strömungsdichte Verbindung zwischen dem Zentrierstutzen und dem Rohranschlussstück zu gewährleisten.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: einen Flüssigkeitsfilter mit einem ringförmigen bzw. hohlzylindrischen Filterelement in einem Filtergehäuse, auf das ein Deckel aufgesetzt ist, an welchem formschlüssig ein Rohranschlussstück gehalten ist,
- Fig. 2: eine Ausschnittvergrößerung aus dem Bereich der formschlüssigen Befestigung des Rohranschlussstücks am Deckel,
- Fig. 3: Deckel und Rohranschlussstück in gelöster Stellung,
- Fig. 4: in einer Ausführungsvariante eine Verbindung zwischen Rohranschlussstück und Deckel,
- Fig. 5: in einer weiteren Ausführungsvariante ein Rohranschlussstück in formschlüssiger Verbindung mit dem Deckel,
- Fig. 6, 7: eine weitere Ausführungsvariante von Rohranschlussstück und Deckel, wobei Fig. 7 eine Ausschnittvergrößerung aus Fig. 6 darstellt,
- Fig. 8: eine weitere Ausführungsvariante von Rohranschlussstück und Deckel,
- Fig. 9: ein Flüssigkeitsfilter mit integriertem Druckregelventil im Rohranschlussstück,
- Fig. 10: ein Flüssigkeitsfilter mit integrierten Rückschlagventilen im Rohranschlussstück, in welchem ein Zulauf- und ein Ablaufkanal koaxial angeordnet sind,
- Fig. 11: ein Flüssigkeitsfilter mit integrierter Entlüftungsschraube im Rohranschlussstück,
- Fig. 12 bis 14: verschiedene Ansichten eines Flüssigkeitsfilters mit zwei separat ausgebildeten Rohranschlussstücken für den Zulauf und den Ablauf des Fluids.

In den Figuren sind gleiche Bauteile mit gleichen Bezugszeichen versehen.

### Ausführungsform(en) der Erfindung

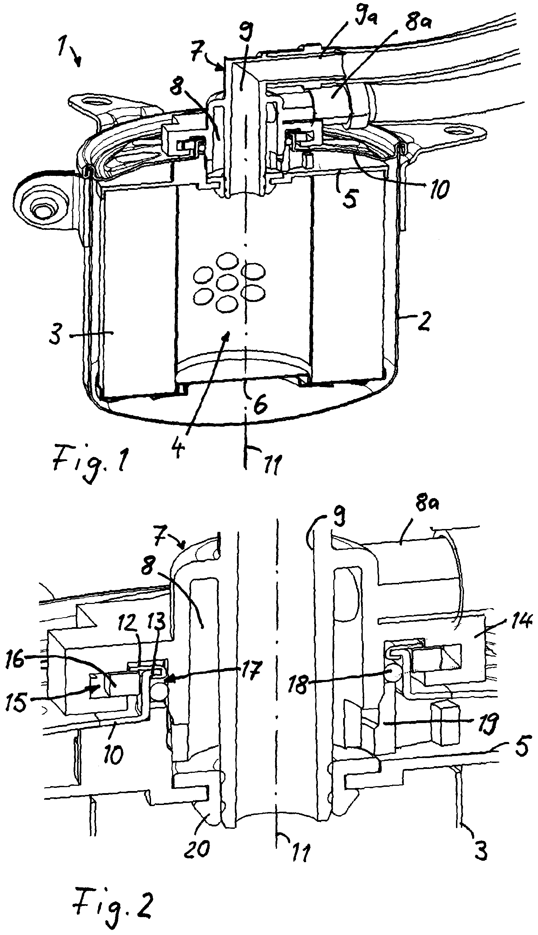

Die Figuren zeigen jeweils eine Filtereinrichtung 1, die als Flüssigkeitsfilter zur Filtration von Kraftstoff, beispielsweise Dieselkraftstoff ausgeführt ist. Im Ausführungsbeispiel gemäß den Fig. 1 bis 3 weist die Filtereinrichtung 1 ein topfförmiges Filtergehäuse 2 zur Aufnahme eines ringförmigen bzw. hohlzylindrischen Filterelementes 3 auf, das radial von außen nach innen von dem zu reinigenden Fluid durchströmt wird. Der Innenraum 4 im Filterelement 3 bildet dementsprechend die Reinseite, die radial außen liegende Mantelfläche die Rohseite am Filterelement. Die axialen Stirnseiten des Filterelementes 3 sind von Endscheiben 5 und 6 verschlossen. Benachbart zur oberen Endscheibe 5, die eine zentrale Strömungsöffnung aufweist, ist ein Rohranschlussstück 7 mit einem Zulaufkanal 8 für die Zufuhr von ungereinigtem Rohfluid und einem Ablaufkanal 9 für die Ableitung gereinigten Reinfluids an der Filtereinrichtung 1 befestigbar. Das Rohranschlussstück 7 ist an einem Deckel 10 befestigbar, der auf die offene Seite des topfförmigen Filtergehäuses 2 aufgesetzt ist. Der Deckel 10 ist fest mit dem Filtergehäuse verbunden.

Der Ablaufkanal 9 des Rohranschlussstücks 7 ragt in die zentrale Strömungsöffnung in der Endscheibe 5 am Filterelement 3 ein und kommuniziert mit dem Innenraum 4, in welchem sich das gereinigte Fluid ansammelt. Die Ableitung des Reinfluids erfolgt somit aus dem Innenraum 4 über die zentrale Strömungsöffnung in der Endscheibe 5 und den Ablaufkanal 9 im Rohranschlussstück 7.

Das Rohranschlussstück 7 ist als Doppelkonnektor ausgebildet mit einem gemeinsamen Gehäuse für den Zulaufkanal 8 und den Ablaufkanal 9. Zulaufkanal 8 und Ablaufkanal 9 sind konzentrisch zueinander angeordnet, wobei der Zulaufkanal 8 einen größeren Durchmesser aufweist als der Ablaufkanal 9 und diesen umgreift. Über Stutzen 8a und 9a sind die Kanäle 8, 9 an Schläuche für die Zufuhr bzw. Ableitung des Fluids angeschlossen.

Die Zufuhr des Rohfluids erfolgt über den Stutzen 8a und den Zulaufkanal 8 zur radial außen liegenden Mantelfläche des Filterelementes 3, welches radial von außen nach innen von dem zu reinigenden Fluid durchströmt wird. Die Ableitung erfolgt, wie vorbeschrieben, aus dem Innenraum 4 axial über den Ablaufkanal 9 und den Ablaufstutzen 9a sowie weiter über den angeschlossenen Schlauch.

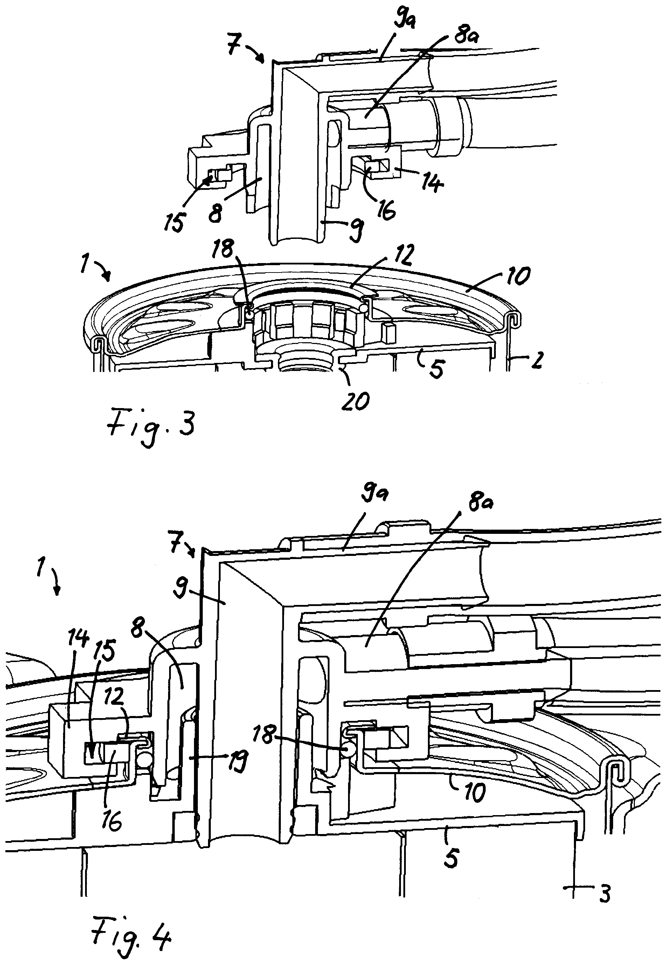

Das Rohranschlussstück 7 ist separat von der Filtereinrichtung 1 ausgeführt und an dem Deckel 10 formschlüssig gehalten. Der Formschluss erfolgt in Richtung der Filterlängsachse 11 über einen umgebogenen Kragen 12 (Fig. 2, 3), der separat vom Deckel 10 ausgebildet ist, jedoch mit dem Deckel 10 verbunden ist. In den Deckel 10 ist eine zentrale Öffnung zur Aufnahme des Rohranschlussstücks 7 eingebracht, wobei an der die zentrale Öffnung begrenzenden Wandung am Deckel 10 ein radial nach innen umgebogener Begrenzungsabschnitt 13 angeformt ist, welcher Träger des sich in Radialrichtung nach außen erstreckenden Kragens 12 ist. Der Kragen 12 kann durch Umbördeln des Begrenzungsabschnittes 13 am Deckel 10 befestigt werden.

Einteilig mit dem Gehäuse des Rohranschlussstücks 7 ist ein Verbindungsabschnitt 14 ausgebildet, welcher eine Formschlusstasche 15 beherbergt, wobei der Verbindungsabschnitt 14 den radial nach außen gerichteten Kragen 12 axial umgreift. Um eine axial formschlüssige Verbindung zwischen dem Rohranschlussstück 7 und dem Deckel 10 herzustellen, ist in die Formschlusstasche 15 im Verbindungsabschnitt 14 ein Riegel 16 eingeschoben, der gemäß Fig. 2 den radial nach außen gerichteten Abschnitt des Kragens 12 untergreift. Zugleich ist der Riegel 16 von den U-förmig ausgebildeten Wandungen des Verbindungsabschnittes 14 gehalten. Der Riegel 16 ist beispielsweise U-förmig ausgebildet und wird über sich in Querrichtung erstreckende Ausnehmungen in der Wandung des Verbindungsabschnittes 14 bis zum Erreichen der axial formschlüssigen Position eingeschoben. Daraufhin ist das Rohranschlussstück 7 axial formschlüssig am Deckel 10 gehalten.

Der radial nach innen gerichtete Begrenzungsabschnitt 13 am Deckel 10 begrenzt außerdem eine Dichttasche 17, in die ein Dichtring 18 eingesetzt ist, welcher am Deckel 10 gehalten ist. In die entgegengesetzte Richtung ist der Dichtring 18 axial von einem Zentrierstutzen 19 abgestützt, der an der Endscheibe 5 angeordnet und in den das Rohranschlussstück 7 einführbar ist. Die Dichttasche 17 liegt axial etwa auf gleicher Höhe wie die Formschlusstasche 15, jedoch gegenüber der Formschlusstasche 15 radial nach innen versetzt.

Ein weiteres Dichtungselement 20 befindet sich an der zentralen Strömungsöffnung, die in die Endscheibe 5 eingebracht ist, wobei der Ablaufkanal 9 an dem ringförmigen Dichtungselement 20 anliegt.

In Fig. 4 erfolgt die axial formschlüssige Verbindung zwischen dem Rohranschlussstück 7 und dem Deckel 10 wie beim ersten Ausführungsbeispiel gemäß den Fig. 1 bis 3. Jedoch ist bei Fig. 4 der Zentrierstutzen 19, welcher einteilig mit der Endscheibe 5 ausgebildet ist, unmittelbar an der Außenwand des Ablaufkanals 9 anliegend ausgeführt, wohingegen bei den Fig. 1 bis 3 der Zentrierstutzen mit radialem Abstand zum Ablaufkanal 9 angeordnet ist. Die axiale Abstützung des Dichtrings 18 in der Dichttasche erfolgt über ein Abstützelement, welches vorteilhafterweise ebenfalls einteilig mit der Endscheibe 5 ausgebildet oder an der Endscheibe 5 angeordnet ist.

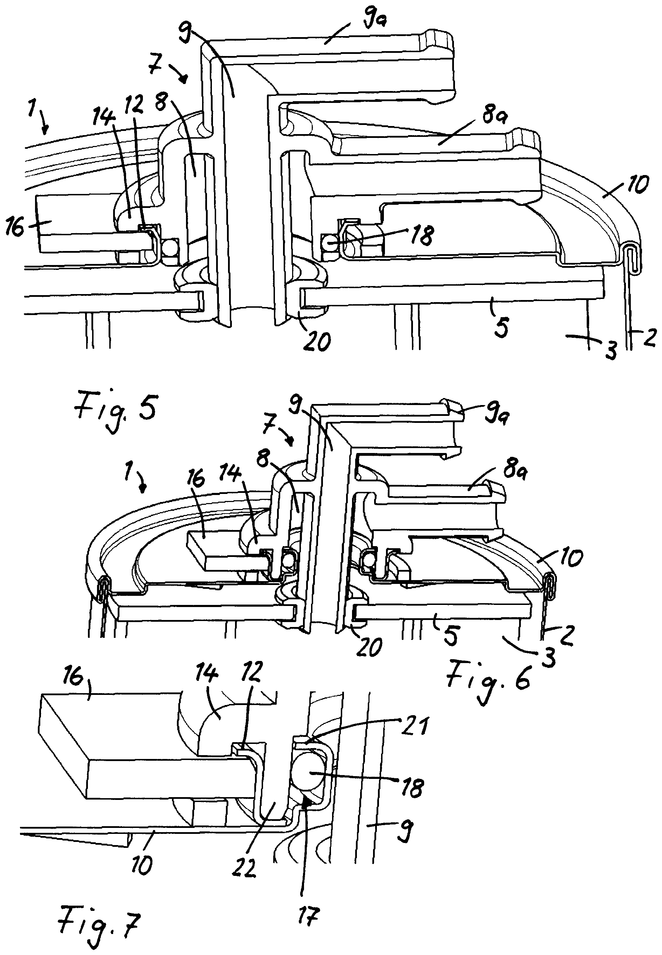

Im Ausführungsbeispiel gemäß Fig. 5 ist der Kragen 12 einteilig mit dem Deckel 10 ausgebildet. Der Kragen 12 bildet den radial nach außen umgebogenen Endabschnitt des Deckels 10 im Bereich der die zentrale Öffnung begrenzenden Wandung.

In das Gehäuse des Rohranschlussstücks 7 ist im Bereich des Verbindungsabschnittes 14 eine sich in Querrichtung erstreckende Öffnung eingebracht, in die ein Riegel 16 eingeschoben ist, der rechteckförmig ausgebildet ist und von dem Kragen 12 umgriffen wird. Dadurch ist eine axial formschlüssige Verbindung zwischen dem Rohranschlussstück 7 und dem Deckel 10 gegeben.

Die sich in Achsrichtung erstreckende Wandung des Deckels 10, welche die zentrale Öffnung begrenzt, bildet radial nach außen eine Abstützung für den Dichtring 18.

Im Ausführungsbeispiel gemäß den Fig. 6 und 7 ist der Kragen 12 separat vom Deckel 10 ausgebildet und in geeigneter Weise, beispielsweise über Löten, mit dem Deckel 10 verbunden. Der Kragen 12 weist an seinem dem Deckel 10 abgewandten Ende einen radial nach außen umgebogenen Abschnitt auf, der im montierten Zustand den in Querrichtung eingeschobenen, rechteckförmigen Riegel 16 übergreift.

Die Dichttasche 17 zur Aufnahme des Dichtrings 18 ist von einem Begrenzungsteil 21 übergriffen, das einteilig mit dem Deckel ausgebildet ist und den radial nach innen umgebogenen Endabschnitt im Bereich der zentralen Öffnung im Deckel bildet. Das Begrenzungsteil 21 befindet sich gegenüber dem Kragen 12 radial nach innen versetzt. Radial nach außen ist der Dichtring 18 von einer Wandung 22 begrenzt, die einteilig mit dem Verbindungsabschnitt 14 am Rohranschlussstück 7 ausgebildet ist.

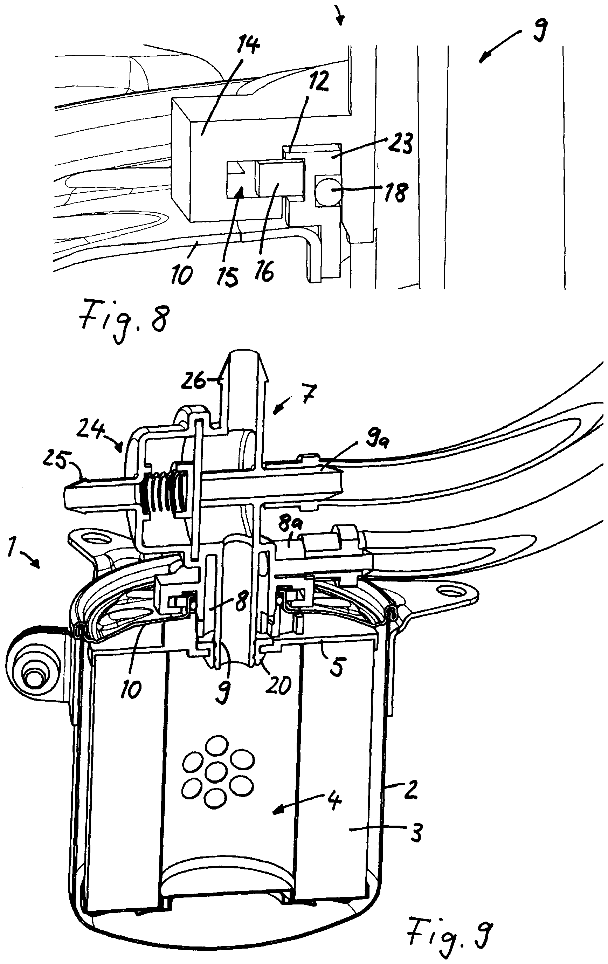

Im Ausführungsbeispiel gemäß Fig. 8 ist der Kragen 12 radial nach außen gerichtet und einteilig mit einem Formschlussbauteil 23 ausgebildet, das separat vom Deckel 10 ausgeführt, jedoch fest mit diesem verbunden ist. Das Formschlussbauteil 23 mit dem radial nach außen gerichteten Kragen 12 zur formschlüssigen Sicherung des eingeschobenen Riegels 16 sowie des Verbindungsabschnittes 14 begrenzt radial nach innen eine Dichttasche zur Aufnahme des Dichtrings 18.

Im Ausführungsbeispiel gemäß Fig. 9 ist die formschlüssige Verbindung zwischen dem Rohranschlussstück 7 und dem Deckel 10 wie im ersten Ausführungsbeispiel gemäß den Fig. 1 bis 3 ausgeführt. Auch das Rohranschlussstück 7 ist wie vorbeschrieben als Doppelkonnektor mit integriertem Zulaufkanal 8 und Ablaufkanal 9 ausgeführt. Zusätzlich ist das Rohranschlussstück 7 mit einem Druckregelventil 24 ausgestattet, das den Kraftstoffsystemdruck vor den Einspritzventilen relativ zum Saugrohrdruck auf einen konstanten Wert (Kraftstoffdifferenzdruck) hält. Dadurch ist die Einspritzmenge nur von der Ansteuerzeit der Einspritzventile abhängig und unter allen Betriebsumständen über die Ansteuerzeit reproduzierbar. Es wird demzufolge pro Zeiteinheit bei allen Druckverhältnissen dieselbe Menge Kraftstoff eingespritzt.

Es handelt sich bei dem Druckregelventil 24 um ein Bypassventil, das bei Überschreiten des eingestellten Druckes über eine federbelastete Membran einen Rücklaufkanal 26 für den Kraftstoff zum Tanken freigibt. Das Druckregelventil 24 besitzt eine Unterdruckleitung zum Saugrohr (Saugrohranschluss 25), damit der absolute Kraftstoffdruck proportional zum Saugrohrdruck verändert werden kann.

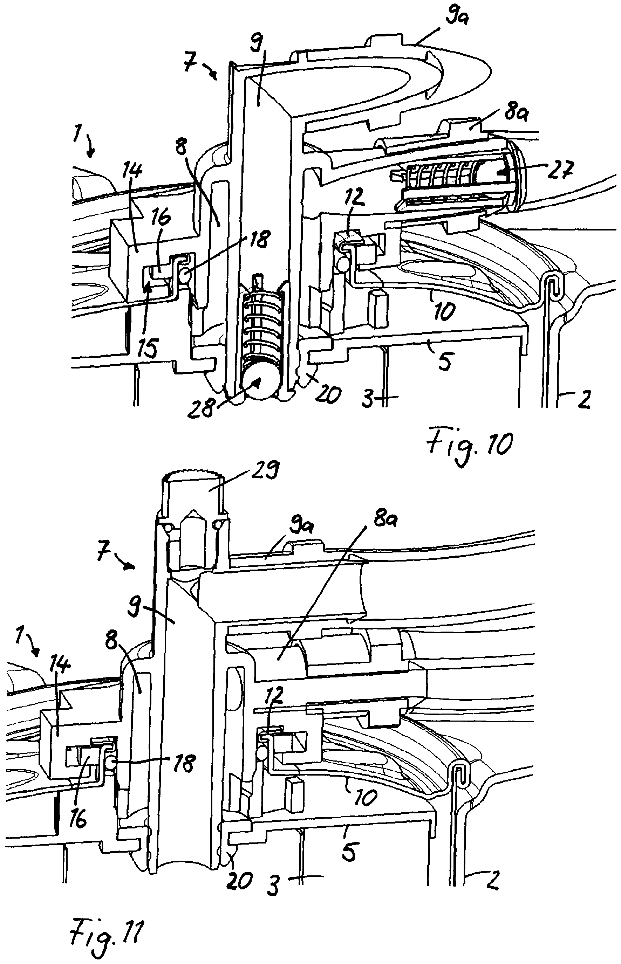

Im Ausführungsbeispiel gemäß Fig. 10 sind Rückschlagventile 27 und 28 in den Zulaufkanal 8 bzw. den Ablaufkanal 9 integriert. Im Zulaufkanal 8 befindet sich das Rückschlagventil 27 im Bereich des Stutzens 8a, im Zulaufkanal 9 liegt dagegen das Rückschlagventil 28 unmittelbar an dem in den Innenraum des Filterelementes 3 einragenden Ende. Die Rückschlagventile 27, 28 öffnen in Richtung der regulären Strömungsrichtung des Zulaufs bzw. Ablaufs von Roh- bzw. Reinfluid und schließen in die entgegengesetzte Richtung.

Im Ausführungsbeispiel gemäß Fig. 11 ist das Rohranschlussstück 7 mit einer Entlüftungsschraube 29 ausgestattet, die im Bereich des Ablaufkanals 9 angeordnet ist.

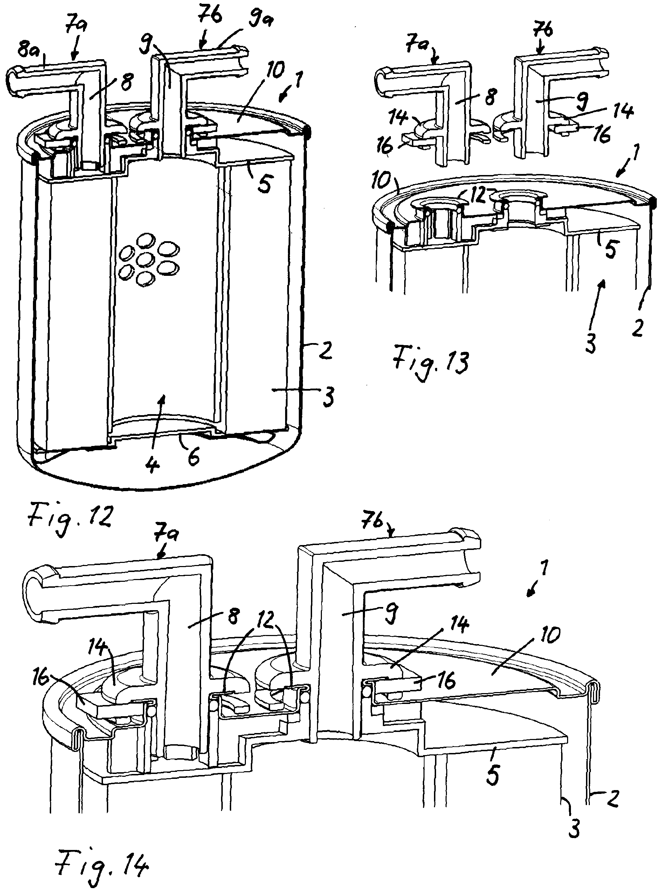

Im Ausführungsbeispiel gemäß den Fig. 12 bis 14 sind zwei separat ausgeführte Rohranschlussstücke 7a und 7b vorgesehen, die beide am Deckel 10 formschlüssig gehalten sind. Das erste Rohranschlussstück 7a weist den Zulaufkanal 8 auf, das zweite Rohranschlussstück 7b den Ablaufkanal 9.

Die Rohranschlussstücke 7a und 7b sind parallel zueinander angeordnet und beide an dem Deckel 10 in gleicher Weise formschlüssig gehalten. Das Rohranschlussstück 7b mit dem Ablaufkanal 9 ist zentrisch angeordnet, das Rohranschlussstück 7a mit dem Zulaufkanal 8 liegt hierzu parallel versetzt. In den Deckel 10 sind entsprechend zwei versetzt angeordnete Ausnehmungen eingebracht zur Aufnahme jeweils eines Rohranschlussstückes 7a bzw. 7b.

Die formschlüssige Verbindung erfolgt jeweils über den Verbindungsabschnitt 14 am Rohranschlussstück, in den eine seitliche Öffnung zum Einführen des rechteckförmigen Riegels 16 eingebracht ist. Im eingeschobenen Zustand wird der Riegel 16 von dem Kragen 12 (Fig. 13, 14) übergriffen, der separat vom Deckel 10 ausgebildet, jedoch durch Umbördeln mit dem Deckel 10 verbunden ist.

## Patentansprüche

1. Filtereinrichtung, insbesondere Flüssigkeitsfilter, mit einem in ein Filtergehäuse (2) eingesetzten, hohlzylindrischen Filterelement (3), das an den Stirnseiten Endscheiben (5, 6) aufweist, wobei in eine Endscheibe (5) eine Strömungsöffnung eingebracht ist, die den reinseitigen Anschluss bildet, **dadurch gekennzeichnet, dass** in einen Deckel (10) des Filtergehäuses (2) ein Anschluss für die Zufuhr bzw. Ableitung von Fluid eingebracht und in den Anschluss im Deckel (10) ein erstes Dichtungselement (18) eingesetzt ist, das koaxial zu einem zweiten Dichtungselement (20) in der Strömungsöffnung in der Endscheibe (5) angeordnet ist, wobei zur formschlüssigen Befestigung eines mit der Strömungsöffnung kommunizierenden Rohranschlussstücks am Deckel des Filtergehäuses oder einem mit dem Deckel verbundenen Bauteil ein radial gerichteter Kragen (12) angeordnet ist, der einen axialen Anschlag für die Befestigung des Rohranschlussstücks bilden kann, wobei der Kragen (12) auf der Außenseite des Deckels (10) von diesem derart beabstandet ist, dass zwischen Deckel (10) und Kragen (12) ein radial nach außen geöffneter, ringnutförmiger Eingriffsbereich für einen Riegel gebildet ist, wobei das erste Dichtungselement (18) axial auf einer Höhe zwischen Kragen (12) und Deckel (10) angeordnet ist.

2. Filtereinrichtung nach Anspruch 1, **dadurch gekennzeichnet, dass** das erste und das zweite Dichtungselement (18, 20) einen unterschiedlichen Durchmesser aufweisen.

3. Filtereinrichtung nach Anspruch 1 oder 2, **dadurch gekennzeichnet, dass** das erste und das zweite Dichtungselement (18, 20) axial versetzt zueinander angeordnet sind.

4. Filtereinrichtung nach Anspruch 2 und 3, **dadurch gekennzeichnet, dass** das Dichtungselement (18) im Deckel (10) einen größeren Durchmesser aufweist als das Dichtungselement (20) in der Endscheibe (5).

5. Filtereinrichtung nach einem der vorhergehenden Ansprüche, **dadurch gekennzeichnet, dass** erste Dichtungselement (18) in Radialrichtung dichtet.

6. Filtereinrichtung nach einem der vorhergehenden Ansprüche, **dadurch gekennzeichnet, dass** zweite Dichtungselement (20) in Radialrichtung dichtet.

7. Rohranschlussstück für eine Filtereinrichtung (1) nach einem der vorhergehenden Ansprüche 1 bis 6, **dadurch gekennzeichnet, dass** das Rohranschlussstück (7) in einem gemeinsamen Gehäuse einen Zulaufkanal (8) für die Zufuhr von Rohfluid und Ablaufkanal (9) für die Ableitung von Reinfluid aufweist, wobei der Zulaufkanal (8) und der Ablaufkanal (9) koaxial zueinander angeordnet und jeweils in die Anschlüsse mit den Dichtungselementen (18, 20) in der Filtereinrichtung (1) einsetzbar sind, das Rohranschlussstück (7) umfassend einen Verbindungsabschnitt zur Bildung einer Formschlusstasche zwischen dem Verbindungsabschnitt und dem Kragen, das Rohranschlussstück (7) umfassend einen U-förmigen Riegel, der zur Herstellung des Formschlusses zwischen Rohranschluss und Kragen radial in die Formschlusstaschen einführbar ist.

8. Rohranschlussstück nach Anspruch 7, **dadurch gekennzeichnet, dass** der Zulaufkanal (8) den Ablaufkanal (9) ringförmig umgreift.

9. Rohranschlussstück nach Anspruch 7 oder 8, **dadurch gekennzeichnet, dass** mindestens ein Rückschlagventil (27) in das Rohranschlussstück (7) integriert ist.

10. Rohranschlussstück nach einem der Ansprüche 7 bis 9, **dadurch gekennzeichnet, dass** ein Druckregelventil (24) in einen Rücklaufkanal (26) integriert ist.

11. Rohranschlussstück nach einem der Ansprüche 7 bis 10, **dadurch gekennzeichnet, dass** eine Entlüftungsschraube (29) in ein Rohranschlussstück (7) integriert ist.

12. Filtersystem mit einer Filtereinrichtung nach einem der Ansprüche 1 bis 6 und einem Rohranschlussstück nach einem der Ansprüche 7 bis 11.

## Claims

1. Filtering device, in particular liquid filter, having a hollow-cylindrical filter element (3) inserted in a filter housing (2), which filter element features end discs (5, 6) at the front faces, wherein a flow opening forming the clean-sided connection is realized in an end disc (5), **characterized in that** a connection for the supply or the discharge for the fluid is realized in a cover (10) of the filter housing (2) and that a first sealing element (18) disposed coaxially with regard to a second sealing element (20) in the flow opening in the end disc (5) is realized in the connection in the cover (10), wherein a radially directed collar (12) is disposed on the cover of the filter housing or on a component connected to the cover for the form-fitting fastening of a pipe connector communicating with the flow opening, which collar can form an axial stop for fastening the pipe connector, wherein the collar (12) on the exterior side of the cover (10) is spaced apart from the latter in such a way that between the cover (10) and the collar (12) an annularly grooved engagement portion opened radially outwardly is formed for a latch, wherein the first sealing element (18) is axially disposed at a height between the collar (12) and the cover (10).

2. Filtering device according to claim 1, **characterized in that** the first and the second sealing element (18, 20) feature a different diameter.

3. Filtering device according to claim 1 or 2, **characterized in that** the first and the second sealing element (18, 20) are offset in relation to each other.

4. Filtering device according to claim 2 and 3, **characterized in that** the sealing element (18) in the cover (10) features a larger diameter than the sealing element (20) in the end disc (5).

5. Filtering device according to one of the preceding claims, **characterized in that** the first sealing element (18) seals in the radial direction.

6. Filtering device according to one of the preceding claims, **characterized in that** the second sealing element (20) seals in the radial direction.

7. Pipe connector for a filtering device (1) according to one of the preceding claims 1 to 6, **characterized in that** the pipe connector (7) features in a common housing a supply channel (8) for supplying the raw fluid and a discharge channel (9) for discharging the clean fluid, wherein the supply channel (8) and the discharge channel (9) are disposed coaxially to each other and are insertable each into the connections with the sealing elements (18, 20) in the filtering device (1), the pipe connector (7) comprising a connecting section for forming a form-fitting pocket between the connecting section and the collar, the pipe connector (7) comprising a U-shaped latch radially insertable into the form-fitting pockets for realizing the form-fitting connection between pipe connector and collar.

8. Pipe connector according to claim 7, **characterized in that** the supply channel (8) surrounds the discharge channel (9) in an annular manner.

9. Pipe connector according to claim 7 or 8, **characterized in that** at least one non-return valve (27) is integrated into the pipe connector (7).

10. Pipe connector according to one of the claims 7 to 9, **characterized in that** a pressure regulating valve (24) is integrated into a return channel (26).

11. Pipe connector according to one of the claims 7 to 10, **characterized in that** a bleed screw (29) is integrated into a pipe connector (7).

12. Filter system having a filtering device according to one of the claims 1 to 6, and a pipe connector according to one of the claims 7 to 11.

## Revendications

1. Dispositif de filtration, notamment filtre à liquide, ayant un élément filtrant (3) en forme de cylindre creux inséré dans un boîtier de filtre (2), lequel élément filtrant présente des disques d'extrémité (5, 6) aux faces frontales, dans lequel une ouverture d'écoulement formant un raccordement côté pur est réalisée dans un disque d'extrémité (5), **caractérisé en ce qu'**un raccordement pour l'alimentation ou l'évacuation des fluides est réalisé dans un couvercle (10) du boîtier de filtre (2) et qu'un premier élément d'étanchéité (18) disposé coaxialement par rapport à un second élément d'étanchéité (20) dans l'ouverture d'écoulement dans le disque d'extrémité (5) est réalisé dans le raccordement dans le couvercle (10), dans lequel une collerette (12) orientée radialement est disposée sur le couvercle du boîtier de filtre ou sur un composant relié au couvercle pour la fixation par engagement positif d'un raccord de tuyau communiquant avec l'ouverture d'écoulement, laquelle collerette peut former une butée axiale pour la fixation du raccord de tuyau, dans lequel la collerette (12) sur la face extérieure du couvercle (10) est espacée de ce dernier de telle manière qu'entre le couvercle (10) et la collerette (12) une zone d'engagement en forme de rainure annulaire ouverte radialement vers l'extérieur est formée pour un verrou, dans lequel le premier élément d'étanchéité (18) est disposé axialement à une hauteur entre la collerette (12) et le couvercle (10).

2. Dispositif de filtration selon la revendication 1, **caractérisé en ce que** le premier et le second élément d'étanchéité (18, 20) présentent un diamètre différent.

3. Dispositif de filtration selon la revendication 1 ou 2, **caractérisé en ce que** le premier et le second élément d'étanchéité (18, 20) sont disposés de manière décalée axialement l'un par rapport à l'autre.

4. Dispositif de filtration selon la revendication 2 et 3, **caractérisé en ce que** l'élément d'étanchéité (18) dans le couvercle (10) présente un diamètre plus grand que l'élément d'étanchéité (20) dans le disque d'extrémité (5).

5. Dispositif de filtration selon l'une quelconque des revendications précédentes, **caractérisé en ce que** le premier élément d'étanchéité (18) étanche en sens radial.

6. Dispositif de filtration selon l'une quelconque des revendications précédentes, **caractérisé en ce que** le second élément d'étanchéité (20) étanche en sens radial.

7. Raccord de tuyau pour un dispositif de filtration (1) selon l'une quelconque des revendications précédentes 1 à 6, **caractérisé en ce que** le raccord de tuyau (7) présente dans un boîtier commun un canal d'alimentation (8) pour l'alimentation en fluide brut et un canal d'évacuation (9) pour l'évacuation du fluide pur, dans lequel le canal d'alimentation (8) et le canal d'évacuation (9) sont disposés coaxialement l'un par rapport à l'autre et pouvant chacun être inséré dans les raccordements avec les éléments d'étanchéité (18, 20) dans le dispositif de filtration (1), le raccord de tuyau (7) comprenant une section de raccordement pour former une poche d'ajustement entre la section de raccordement et la collerette, le raccord de tuyau (7) comprenant un verrou en forme de U qui peut être inséré radialement dans les poches d'ajustement pour réaliser l'engagement positif entre le raccord de tuyau et la collerette.

8. Raccord de tuyau selon la revendication 7, **caractérisé en ce que** le canal d'alimentation (8) entoure le canal d'évacuation (9) de manière annulaire.

9. Raccord de tuyau selon l'une quelconque des revendications 7 ou 8, **caractérisé en ce qu'**au moins un clapet antiretour (27) est intégré dans un raccord de tuyau (7).

10. Raccord de tuyau selon l'une quelconque des revendications 7 à 9, **caractérisé en ce qu'**une soupape de régulation de pression (24) est intégrée dans un canal de retour (26).

11. Raccord de tuyau selon l'une quelconque des revendications 7 à 10, **caractérisé en ce qu'**une vis de purge (29) est intégrée dans un raccord de tuyau (7).

12. Système de filtre ayant un dispositif de filtration selon l'une quelconque des revendications 1 à 6, et un raccord de tuyau selon l'une quelconque des revendications 7 à 11.
